# EUROPEAN PATENT APPLICATION

(11) **EP 4 318 811 A1**
(43) Date of publication of application: **07.02.2024**
(21) Application number: 23177162.7
(22) Date of filing: 05.06.2023
(51) Int. Cl.: H01R 4/58, H01R 11/28, H01R 43/16, H01M 50/50

(54) **STAMPED AND FORMED ELECTRICAL CONTACT AND METHOD OF PRODUCING SAME**

(30) Priority: 02.08.2022 US 202217879244
(71) Applicant: Aptiv Technologies Limited, St. Michael (BB)
(72) Inventor: PETERSON, David R., Aurora, OH, 44202 (US); WEIDNER, Jonathan David, Conneautville, PA, 16406 (US); BOHAN, Andrew, Tallmadge, OH, 44278 (US); JANIS, Jeff, Warren, OH, 44484 (US); DREW, George, Warren, OH, 44484 (US); DURSE, Nicholas A., Youngstown, OH, 44511 (US); MARTIN, Jacob, Olmsted, OH, 44070 (US)
(74) Representative: Bardehle Pagenberg Partnerschaft mbB Patentanwälte Rechtsanwälte

(57) **Abstract**

An electrical assembly includes an electrical conductor having a planar portion (106) and defining a bore hole (108) extending through the planar portion (106) and an electrical contact (102, 202) having a tubular portion (110, 210) disposed within the bore hole (108) and a plurality of contact petals (112, 212) extending radially from the tubular portion (110, 210). The plurality of contact petals (112, 212) are in electrical contact (102, 202) with the electrical conductor. A method (300) of producing such an electrical assembly is also provided.

## Description

This application is directed to an electrical contact stamped from a sheet of metal and formed and a method of producing such an electrical contact.

Machined electrical contacts have been used to provide a durable, low resistance, connection to electrical components, such as relays and contactors. These machined electrical contacts may also be applied to bus bars connections. These machined electrical contacts are used to improve electrical contact resistance in place of plating or cladding the contact portions of the bus bar with a conductive material such as silver or gold which adds processing cost and time. The machined electrical contacts are relatively quick and easy to install on a bus bar but have a relatively high part cost. Further, different contact part configurations are needed to accommodate different height offsets between the bus bar and a terminal.

According to one or more aspects of the present disclosure, an electrical assembly includes an electrical conductor having a planar portion and defining a bore hole extending through the planar portion and an electrical contact having a tubular portion disposed within the bore hole and a plurality of contact petals extending radially from the tubular portion. The plurality of contact petals are in electrical contact with the electrical conductor.

In one or more embodiments of the electrical assembly according to the previous paragraph, the electrical assembly further includes an annular washer defining an aperture, wherein the tubular portion is disposed within the aperture and the washer is arranged between the plurality of contact petals and the planar portion.

In one or more embodiments of the electrical assembly according to any one of the previous paragraphs, the washer defines an open seam.

In one or more embodiments of the electrical assembly according to any one of the previous paragraphs, the tubular portion defines an open seam.

In one or more embodiments of the electrical assembly according to any one of the previous paragraphs, the electrical contact is formed from a single piece of sheet metal.

In one or more embodiments of the electrical assembly according to any one of the previous paragraphs, the electrical contact is formed using a progressive die.

In one or more embodiments of the electrical assembly according to any one of the previous paragraphs, the sheet metal is a silver plated spring steel alloy.

In one or more embodiments of the electrical assembly according to any one of the previous paragraphs, the sheet metal is a tin plated copper-based alloy.

In one or more embodiments of the electrical assembly according to any one of the previous paragraphs, the tubular portion is formed to exert a hoop force against inner walls of the bore hole.

In one or more embodiments of the electrical assembly according to any one of the previous paragraphs, at least two of the plurality of contact petals has a U-shaped slot between them.

In one or more embodiments of the electrical assembly according to any one of the previous paragraphs, at least two of the plurality of contact petals have different shapes.

In one or more embodiments of the electrical assembly according to any one of the previous paragraphs, the plurality of contact petals include four contact petals spaced at 90 degree intervals around the tubular portion.

In one or more embodiments of the electrical assembly according to any one of the previous paragraphs, the tubular portion has a cylindrical tubular shape.

In one or more embodiments of the electrical assembly according to any one of the previous paragraphs, each of the plurality of contact petals has the same shape.

In one or more embodiments of the electrical assembly according to any one of the previous paragraphs, the tubular portion has a regular polygonal tubular shape.

According to one or more aspects of the present disclosure, a method of forming an electrical assembly includes the steps of stamping a sheet of metal to form an electrical contact preform having a rectangular base portion and a plurality of contact tabs extending from one edge of the rectangular base portion, bending the plurality of contact tabs so that they are perpendicular to the rectangular portion, thereby forming a plurality of contact petals, and rolling the rectangular portion so that it forms a tubular portion.

In one or more embodiments of the method according to the previous paragraph, the bending and rolling steps are performed using a progressive die.

In one or more embodiments of the method according to any one of the previous paragraphs, the method further includes the step of inserting the tubular portion within a bore hole extending through a planar portion of an electrical conductor such that the plurality of contact petals are in electrical contact with the electrical conductor.

In one or more embodiments of the method according to any one of the previous paragraphs, the method further includes the step of inserting the tubular portion within an aperture of an annular washer prior to the step of inserting the tubular portion within the bore hole, wherein the washer is arranged between the plurality of contact petals and the planar portion.

The present invention will now be described, by way of example with reference to the accompanying drawings, in which:
Fig. 1 shows a perspective view of a bus bar having stamped and formed electrical contacts according to some embodiments;
Fig. 2 shows an exploded view of the bus bar having stamped and formed electrical contacts of Fig. 1 according to some embodiments;
Fig. 3 shows a perspective view of the stamped and formed electrical contacts of Fig. 1 in various stages for forming according to some embodiments;
Fig. 4A shows a top view of the stamped and formed electrical contacts of Fig. 1 in various stages for forming according to some embodiments;
Fig. 4B shows a side view of the stamped and formed electrical contacts of Fig. 1 in various stages for forming according to some embodiments;
Fig. 5 shows a perspective view of a stamped and formed electrical contact in various stages for forming according to some embodiments; and
Fig. 6 shows a flow chart of a method of forming an electrical contact according to some embodiments.

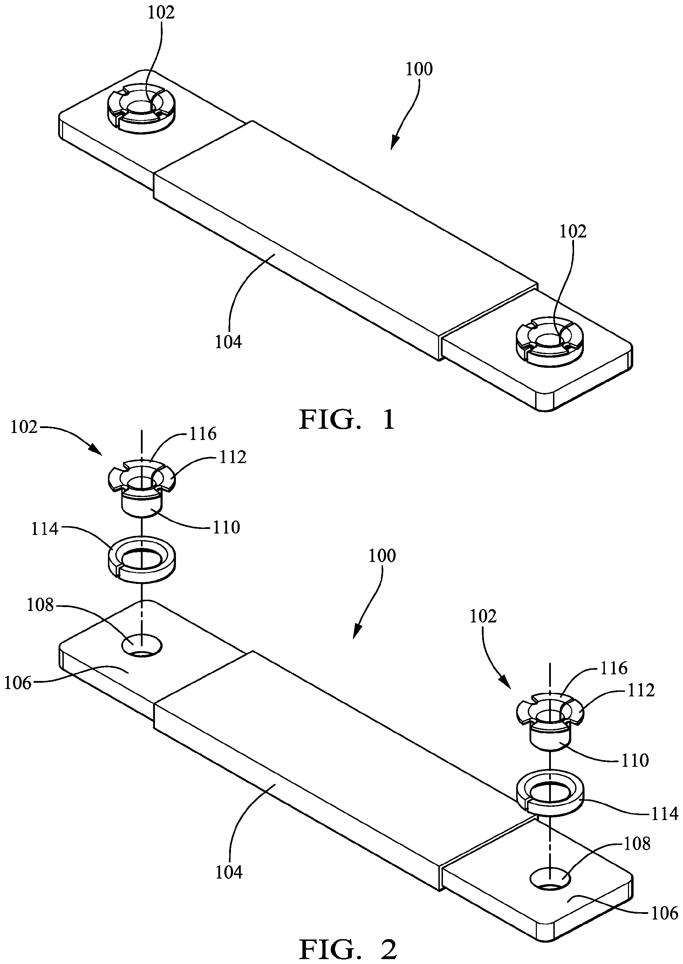

A non-limiting example of an electrical bus bar assembly 100 having electrical contacts 102 that are stamped and formed from a flat sheet of metal rather than machined to have a desired shape is illustrated in Figs. 1 and 2. The electrical contacts 102 are configured to provide improved electrical contact, e.g., lower contact resistance, between the bus bar 104 and an electrical terminal, such as a battery terminal (not shown).

The bus bar 104 has at least one planar portion 106 that defines a bore hole 108 extending through the bus bar 104. An electrical contact 102 is inserted within the bore hole and is in electrical and mechanical contact with the bus bar. The electrical contact 102 is formed from a flat piece of sheet metal and formed to the desired shape, for example by using a progressive die. The electrical contact 102 has a tubular portion 110 that is disposed within the bore hole 108 and a plurality of contact tabs, hereafter referred to as contact petals 112 since they resemble the petals of a flower, which extend radially from the tubular portion 110. The tubular portion 110 may be in electrical and mechanical contact with the inner walls of the bore hole 108. The contact petals 112 may also be in direct electrical and mechanical contact with the bus bar 104.

In the illustrated example, an electrically conductive washer 114 of appropriate thickness may be disposed between the contact petals 112 and the planar portion 106 of the bus bar 104 to provide a desired distance between planar portion 106 of the bus bar 104 and a contact surface 116 of the contact petals 112. In this case, the contact petals 112 are in electrical contact with the bus bar 104 through the washer 114. The washer 114 may be a split washer having a seam, e.g., a helical split lock washer, or it may be a solid disk washer. In alternative embodiments, the contact petals 112 may be folded back onto themselves to provide the desired distance between planar portion 106 of the bus bar 104 and the contact surface 116 of the contact petals 112 (not shown). The bus bar 104 may be secured to the battery terminal, e.g., by a threaded fastener (not shown) extending through the tubular portion 110 of the electrical contact 102.

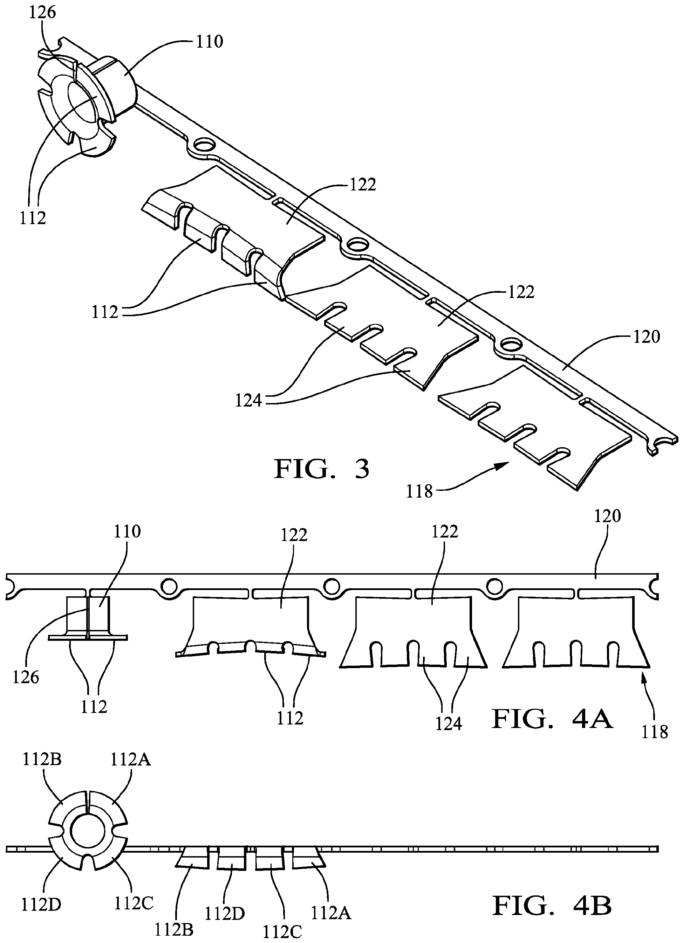

As shown in Figs. 3 and 4A-4B, the electrical contact 102 is formed from a flat piece of sheet metal, e.g., a sheet of a silver coated spring steel alloy or a tin coated copper alloy. A flat contact preform 118 is formed from the sheet metal, e.g., using a stamping, blanking, or cutting process. The contact preform 118 is preferably formed with a carrier strip 120 to facilitate handling and further processing of the contact preform 118. The contact preform 118 has rectangular base portion 122 and a plurality of contact tabs 124 that extend from one edge of the base portion. The contact tabs 124 and the base portion 122 are integrally formed from the same piece of sheet metal. The contact tabs 124 are bent so that they are generally perpendicular to the base portion 122, thereby forming the contact petals 112. Preferably, the contact tabs 124 are bent using a progressive die (not shown). The rectangular base portion 122 is then rolled to form the cylindrical tubular portion 110 and the ends of the base portion 122 are brought together to form an open seam 126. Preferably, the base portion 122 is rolled using the progressive die.

As the tubular portion 110 is inserted into to the bore hole 108 in the bus bar 104, the seam 126 in the tubular portion 110 is narrowed, thus causing the tubular portion 110 to exert a normal hoop force against the inner walls of the bore hole 108, thereby reducing the electrical resistance between the electrical contact 102 and the bus bar 104. The outer walls of the tubular portion 110 and/or the bottom surface of the contact petals 112 opposite the contact surface 116 may be knurled to further reduce electrical resistance between the electrical contact 102 and the bus bar 104.

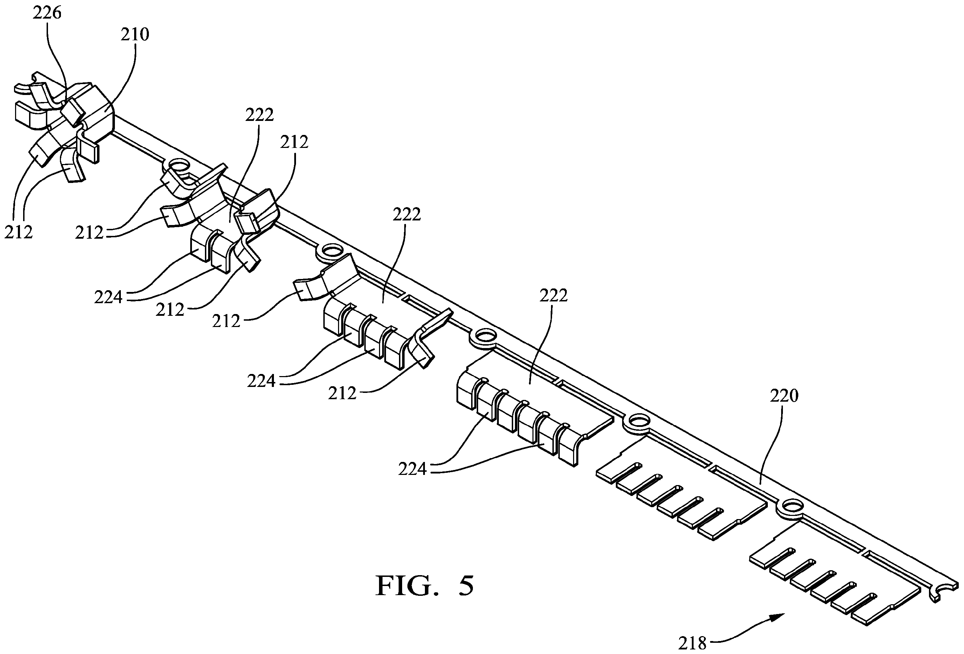

Another non-limiting example of the electrical contact 202 is shown in Fig. 5. This electrical contact 202 may also be produced from sheet metal using a progressive die. This electrical contact 202 mainly differs from the electrical contact 102 shown in Figs. 3 and 4A-4B in that the tubular portion 210 has a regular polygonal tubular shape, e.g., octagonal in the illustrated example, rather than the cylindrical tubular shape of the tubular portion 110. The tubular portion 210 is formed by bending sections of the base portion 222 rather than rolling the base portion 222. In addition, the contact petals 212 of this electrical contact 202 all have the same shape in contrast to the contact petals 112 of the electrical contact 102 in which the contact petals 112A, 112B that are located adjacent the seam 126 have a different shape than the other contact petals 112C, 112D as best shown in Fig. 4B.

As shown in Fig. 5, the electrical contact 202 is formed from a flat piece of sheet metal, e.g., a sheet of a silver coated spring steel alloy or a tin coated copper alloy. A flat contact preform 218 is formed from the sheet metal, e.g., using a stamping, blanking, or cutting process. The contact preform 218 is preferably formed with a carrier strip 220 to facilitate handling and further processing of the contact preform 218. The contact preform 218 has rectangular base portion 222 and a plurality of contact tabs 224 that extend from one edge of the base portion. The contact tabs 224 and the base portion 222 are integrally formed from the same piece of sheet metal. The contact tabs 224 are bent so that they are generally perpendicular to the base portion 222, thereby forming contact petals 212. Preferably, the contact tabs 224 are bent using a progressive die (not shown). The rectangular base portion 222 is then bent to form the tubular portion 210 and the ends of the base portion 222 are brought together to form an open seam 226.

The inventors have found that the electrical contacts 102, 202 described herein have similar mechanical and electrical performance to machined electrical contacts but may be produced at a lower cost.

While the electrical contacts 102, 202 described herein are used to connect an electrical bus bar to an electrical battery terminal, other embodiments of the electrical contacts may be used in other applications, such as relays or contactors.

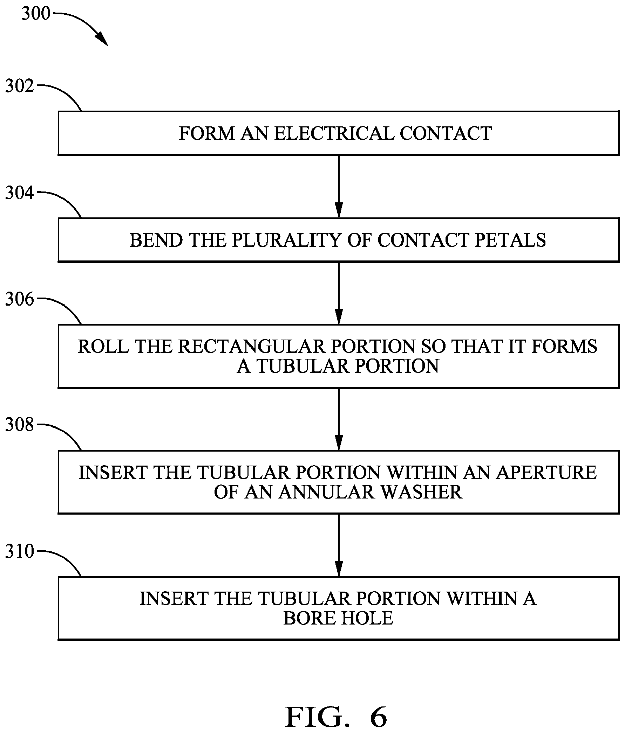

A method 300 of forming the electrical assembly 100, e.g., using the electrical contacts 102 or 202, is illustrated in Fig. 6. The method 300 includes the steps of:

STEP 302, FORM AN ELECTRICAL CONTACT PREFORM, includes stamping a sheet of metal to form an electrical contact preform 118 having a rectangular base portion 122 and a plurality of contact tabs 124 extending from one edge of the rectangular base portion 122. The contact preform 118 is preferably formed with a carrier strip 120 configured to facilitate handling and further processing of the contact preform 118;

STEP 304, FORM A PLURALITY OF CONTACT PETALS, includes bending the plurality of contact tabs 124 so that they are perpendicular to the rectangular base portion 122, thereby forming a plurality of contact petals 112;

STEP 306, ROLL THE RECTANGULAR PORTION SO THAT IT FORMS A TUBULAR PORTION, includes rolling the rectangular base portion 122 into a tubular shape so that it forms a tubular portion 110. The stamping, bending, and rolling operations in STEPS 302 to 306 may be performed using a progressive die;

STEP 308, INSERT THE TUBULAR PORTION WITHIN AN APERTURE OF AN ANNULAR WASHER, is an optional step that includes inserting the tubular portion 110 formed in STEP 306 within an aperture of an annular washer 114. The washer 114 is arranged between the plurality of contact petals 112 and a planar portion 106 of an electrical conductor, such as a bus bar 104. STEP 308, if performed, must be performed prior to STEP 310;

STEP 310, INSERT THE TUBULAR PORTION WITHIN A BORE HOLE IN AN ELECTRICAL CONDUCTOR, includes inserting the tubular portion 110 formed in STEP 306 within a bore hole 108 extending through the planar portion 106 of the bus bar 104 such that the plurality of contact petals 112 are at least in electrical contact with the bus bar 104 if STEP 308 is performed and are also in intimate mechanical contact with the bus bar 104 if STEP 308 is not performed.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical assembly, comprising:
an electrical conductor having a planar portion (106) and defining a bore hole (108) extending through the planar portion (106); and
an electrical contact (102, 202) having a tubular portion (110, 210) disposed within the bore hole (108) and a plurality of contact petals (112, 212) extending radially from the tubular portion (110, 210), wherein the plurality of contact petals (112, 212) are in electrical contact (102, 202) with the electrical conductor.

2. The electrical assembly according to claim 1, further comprising an annular washer (114) defining an aperture, wherein the tubular portion (110) is disposed within the aperture and the washer (114) is arranged between the plurality of contact petals (112) and the planar portion (106).

3. The electrical assembly according to claim 2, wherein the washer (114) defines an open seam (126).

4. The electrical assembly according to any one of the preceding claims, wherein the tubular portion (110, 210) defines an open seam (126, 226).

5. The electrical assembly according to any one of the preceding claims, wherein the electrical contact (102, 202) is formed from a single piece of sheet metal.

6. The electrical assembly according to claim 5, wherein the electrical contact (102, 202) is formed using a progressive die.

7. The electrical assembly according to claim 5 or 6, wherein the sheet metal is a silver plated spring steel alloy.

8. The electrical assembly according to any one of claims 5 to 7, wherein the sheet metal is a tin plated copper-based alloy.

9. The electrical assembly according to any one of the preceding claims, wherein the tubular portion (110, 210) is formed to exert a hoop force against inner walls of the bore hole (108).

10. The electrical assembly according to any one of the preceding claims, wherein at least two of the plurality of contact petals (112) have different shapes.

11. The electrical assembly according to claim 10, wherein the plurality of contact petals (112) include four contact petals (112) spaced at 90 degree intervals around the tubular portion (110).

12. A method (300) of forming an electrical assembly, comprising:
stamping a sheet of metal to form an electrical contact (102, 202) preform (118, 218) having a rectangular base portion (122, 222) and a plurality of contact tabs (124, 224) extending from one edge of the rectangular base portion (122, 222);
bending the plurality of contact tabs (124, 224) so that they are perpendicular to the rectangular portion, thereby forming a plurality of contact petals (112, 212); and
rolling the rectangular portion so that it forms a tubular portion (110, 210).

13. The method (300) according to claim 12, wherein the bending and rolling steps are performed using a progressive die.

14. The method (300) according to claim 12 or 13, further comprising:
inserting the tubular portion (110, 210) within a bore hole (108) extending through a planar portion (106) of an electrical conductor such that the plurality of contact petals (112, 212) are in electrical contact (102, 202) with the electrical conductor.

15. The method (300) according to claim 14, further comprising:
inserting the tubular portion (110, 210) within an aperture of an annular washer (114) prior to the step of inserting the tubular portion (110, 210) within the bore hole (108), wherein the washer (114) is arranged between the plurality of contact petals (112, 212) and the planar portion (106).
